# EUROPÄISCHE PATENTSCHRIFT

(11) **EP 0 706 051 B1**
(45) Veröffentlichungstag und Bekanntmachung des Hinweises auf die Patenterteilung: **11.06.1997**
(21) Anmeldenummer: 95114194.4
(22) Anmeldetag: 09.09.1995
(51) Int. Cl.: G01P 1/02

(54) **Beschleunigungsgeber**
Acceleration sensor
Capteur d'accélération

(30) Priorität: 16.09.1994 DE 9415052 U
(43) Veröffentlichungstag der Anmeldung: 10.04.1996
(73) Patentinhaber: VDO Adolf Schindling AG, 60326 Frankfurt/Main (DE)
(72) Erfinder: Modest, Otmar, Ing. grad., D-78078 Niedereschach (DE); Busse, Andrea, Dipl.-Ing., D-78052 Villingen-Schwenningen (DE); Plankenhorn, Horst, Dipl.-Ing. (FH), D-78048 Villingen-Schwenningen (DE); Schreiber-Prillwitz, Wolfgang, Dipl.-Phys., D-78056 Villingen-Schwenningen (DE)

(56) Entgegenhaltungen:
- EP-A- 0 333 374
- EP-A- 0 489 992
- EP-A- 0 587 294

## Beschreibung

Die Erfindung betrifft einen in Kunststoff eingebetteten Beschleunigungsgeber mit einem mikromechanischen Sensor, einer dem Sensor zugeordnete als Halbleiterbaustein hergestellte Auswerteschaltung und einem Träger, an welchem mit der Auswertung elektrisch verbundene stegförmige Leiter derart vorstrukturiert sind, daß die Leiter nach dem Einbetten aus dem Einbettgehäuse herausragen und durch Freischneiden elektrisch voneinander trennbar sind.

Die Herstellung mikromechanischer Sensoren, die jeweils als ein Glas-Silizium-Glas-Schichtpaket mit einem in der Siliziumschicht herausstrukturierten Biegeschwinger aufgebaut sind und bei denen die Meßwertbildung auf eine kapazitive Abstandsmessung zwischen einer oder zwei feststehenden Elektroden und einer beweglichen Elektrode, in diesem Falle dem Biegeschwinger, basiert, bedingt einen großen Bedarf derartigen Sensoren und macht es andererseits erforderlich, daß auch die Weiterverarbeitung zu einem handelsfähigen, das heißt funktionsfertigen Produkt, beispielsweise einem Beschleunigungsgeber, den Bedingungen der Großserie gerecht wird.

Es ist daher naheliegend, einen derartigen Beschleunigungsgeber als elektronisches Bauteil zu betrachten und den bei Halbleiterbausteinen üblichen Einbettprozess auch für die Herstellung eines Beschleunigungsgebers anzuwenden. Mit dem Einbetten, das heißt einem Umpressen mit warmhärtenden Duroplasten, ist nicht allein die äußere Form des Bausteins gut reproduzierbar, sondern es wird auch ein Abdichten des Sensors und ein Fixieren von Sensor und Auswerteschaltung insbesondere jedoch ein Fixieren der zwischen dem Sensor und der Auswerteschaltung vorgesehenen Bonddrähte erzielt. Es ist ferner selbstverständlich, daß bei einem Einbetten eines Sensors, dessen Funktion lageabhängig ist, an dem Einbettgehäuse eine Bezugsfläche vorgesehen werden muß, die ein in Bezug auf den Sensor definiertes Befestigen des Beschleunigungsgebers auf einem Schaltungsträger gestattet. Zusätzlich muß in dieser Lage ein Kontaktieren der Leiter des Beschleunigungsgebers mit Leiterbahnen des Schaltungsträgers gewährleistet sein.

In vielen Fällen ist es aufgrund der Einbaugegebenheiten nicht möglich den in einem Gerät eingebauten Schaltungsträger und damit den Beschleunigungsgeber stets so auszurichten, daß eine optimale Lage bezüglich der Richtung der zu sensierenden Kräfte gegeben ist. Besteht andererseits die Forderung, daß rechtwinklig und parallel zur Einbaulage des Schaltungsträgers gerichtete Kräfte sensiert werden sollen,muß innerhalb eines Gerätes die Möglichkeit geschaffen werden, einen zweiten Sensor in einer zum Schaltungsträger senkrechten Ebene anordnen zu können. Dies bedeutet, auch bei einer seriengerechten Herstellung eines geeigneten Schaltungsträgers, einen erheblichen Fertigungsaufwand. Das heißt, daß entweder eine spezielle räumliche Gestaltung des Schaltungsträgers und demzufolge eine erschwerte Bestückung oder unterschiedlich gestaltete Beschleunigungsgeber, was die Bezugsfläche und die elektrischen Anschlüsse anbelangt, in Kauf genommen werden müssen.

Der Erfindung lag somit die Aufgabe zugrunde, einen Beschleunigungsgeber zu schaffen, welcher auf einer Leiterplatte anwendungsbezogen angeordnet werden kann.

Die Lösung der Aufgabe beschreibt der Anspruch 1.

Die Erfindung bietet den Vorteil, daß ein oder mehrere Beschleunigungsgeber auf einer ebenen Leiterplatte, und zwar mit unterschiedlicher Lage der Sensoren bezüglich der Leiterplattenebene befestigt und mit den zugeordneten Leiterbahnen kontaktiert werden können, wobei die spätere Einbaulage des Gerätes, in welchem die Leiterplatte befestigt ist, berücksichtigt werden kann. Dieser Vorteil ist deshalb von besonderer Bedeutung, weil bei der Anordnung von Geräten am Meß- bzw. Einbauort im allgemeinen keine Wahlfreiheit bezüglich der Lage des Gerätes und damit bezüglich einer vertikalen oder horizontalen Lage der den Beschleunigungsgeber tragenden Leiterplatte besteht. Vorteilhaft ist ferner, daß der Anwender des erfindungsgemäßen Beschleunigungsgebers keine besonderen konstruktiven und fertigungstechnischen Vorkehrungen treffen muß. Entscheidend für die gefundene Lösung ist außerdem der Gedanke, den Beschleunigungsgeber als SMD-Bauteil zu konzipieren und die elektrischen Anschlüsse derart auszubilden, daß sie in wenigstens zwei rechtwinklig zueinander stehenden Ebenen mit auf einer Leiterplatte befindlichen Leiterbahnen kontaktierbar sind.

Im folgenden sei die Erfindung anhand der beigefügten Zeichnungen näher erläutert.

Es zeigen:
Fig. 1 eine Draufsicht des Beschleunigungsgebers,
Fig. 2 eine Seitenansicht des Beschleunigungsgebers in Pfeilrichtung A,
Fig. 3 eine Seitenansicht des Beschleunigungsgebers in Pfeilrichtung B und
Fig. 4 eine Seitenansicht des Beschleunigungsgebers in Pfeilrichtung C.

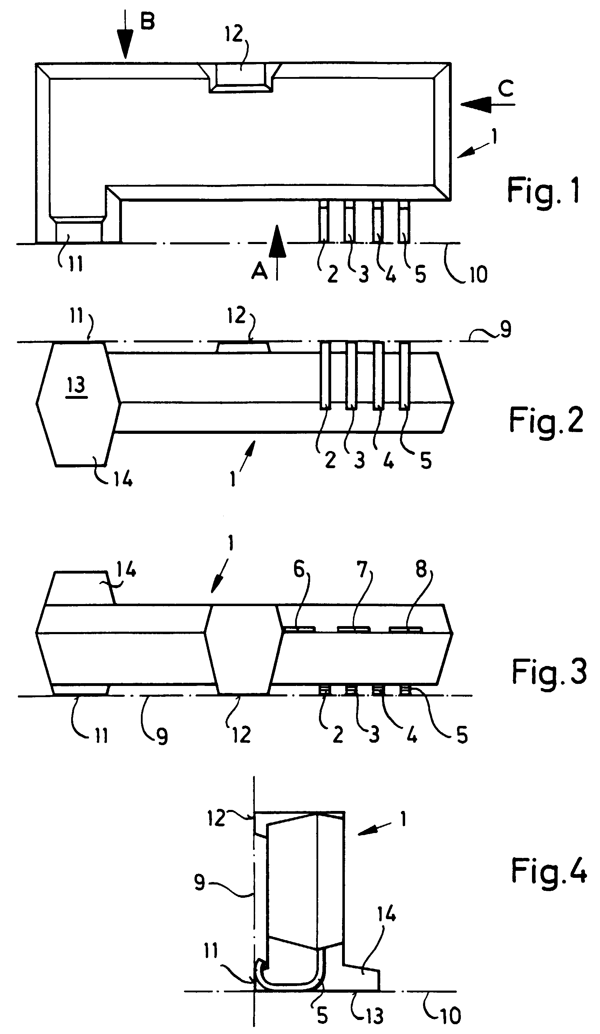

Wie aus der Fig. 1 ersichtlich ist, sind aus dem Einbettgehäuse 1 des Beschleunigungsgebers im folgenden als Leiter bezeichnete elektrische Anschlüsse 2, 3, 4 und 5 herausgeführt. Die Leiter 2, 3, 4 und 5 sind an einem Metallrahmen angeformt, welcher einem mikromechanischen Sensor, wie ihn beispielsweise die DE-C 4201104 zeigt, und einer vorzugsweise als Halbleiterbaustein ausgebildeten Auswertschaltung als Träger dient. Dabei sind, was nicht dargestellt ist, für die Erfindung aber auch nicht wesentlich ist, der Sensor und der Schaltungsbaustein auf dem Metallrahmen festgeklebt und durch Bondverbindungen elektrisch miteinander kontaktiert. Wie aus den Zeichnungen ersichtlich ist, umschließt das Einbettgehäuse 1 den Metallrahmen und die auf diesem befestigen Bauteile bis auf die herausgeführten Leiter 2, 3, 4 und 5 und dem Justieren des Beschleunigsgebers dienende Kontaktfahnen 6, 7 und 8, die in dem dargestellten Fertigungsstadium bereits abgetrennt sind.

Die Leiter 2, 3, 4 und 5 sind, was insbesondere mit der Fig 4 deutlich wird, aus der Ebene des Trägers derart herausgebogen, daß sie sowohl eine zum Träger parallele Ebene 9 als auch eine senkrechte Ebene 10 tangieren. In beiden Ebenen liegen außerdem am Einbettgehäuse 1 ausgebildete Auflageflächen 11 und 12 bzw. 13, die im Zusammenwirken mit den Leitern 2, 3, 4 und 5 die Möglichkeit bieten, den Beschleunigungsgeber in zwei senkrecht zueinander stehenden Ebenen auf einer Leiterplatte abzustützen und an dieser einerseits durch Kleben andererseits durch Löten zu befestigen.

Der Vollständigkeit halber sei noch erwähnt, daß von den Leitern 2, 3, 4 und 5 einer dem Masseanschluß des Beschleunigungsgebers dient, über einen zweiten die Betriebsspannung anlegbar ist, ein weiterer das Ausgangssignal führt und der vierte für das Anlegen eines Testpotentials zum Auslenken des Biegeschwingers des Sensors vorgesehen ist. Da je nach Formgebung, insbesondere jedoch bei einem kreisförmigen Abbiegen der Leiter 2, 3, 4 und 5 diese mit der betreffenden Leiterplatte jeweils nur eine punkt- bzw. linienförmige Berührung aufweisen, ist, um ein Kippen zu vermeiden, die Auflagefläche 13 durch Anformen eines Pfeilers 14 in ausreichender Weise verbreitert ausgebildet. Dabei ist es denkbar, aus der Fläche 13 durch geeignetes Freisparen zwei kleinere Stützflächen zu schaffen.

## Patentansprüche

1. In Kunststoff eingebetteter Beschleunigungsgeber mit einem mikromechanischen Sensor, einer dem Sensor zugeordnete als Halbleiterbaustein hergestellte Auswerteschaltung und einem Träger, an welchem mit der Auswerteschaltung elektrisch verbundene stegförmige Leiter derart vorstrukturiert sind, daß die Leiter nach dem Einbetten aus dem Einbettgehäuse herausragen und durch Freischneiden elektrisch voneinander trennbar sind
dadurch gekennzeichnet,
daß an dem Einbettgehäuse (1) in zwei rechtwinklig zueinander stehenden Ebenen (9, 10), von denen eine sich in Parallellage zur Ebene des eingebetteten Trägers befindet, Auflageflächen (11, 12, 13) angeformt sind und
daß in jeweils jeder der beiden rechtwinklig zueinander stehenden Ebenen (9, 10) des Einbettgehäuses (1) zusätzliche Auflageflächen durch die in geeigneter Weise angebogenen Leiter (2, 3, 4, 5) ausgebildet sind.

2. Beschleunigungsgeber nach Anspruch 1,
dadurch gekennzeichnet,
daß den Leitern (2, 3, 4, 5) eine an dem Träger angeformte ausschließlich mechanisch wirksame Stütze zugeordnet ist.

## Claims

1. An acceleration detector embedded in synthetic material and having a micromechanical sensor, an evaluation circuit manufactured as a semiconductor component and associated with the sensor, and a carrier on which web-shaped conductors which are electrically connected to the evaluation circuit are shaped outwards such that, after embedding, the conductors project out of the embedding housing and may be isolated electrically from one another by punching, characterized in that bearing surfaces (11, 12, 13) are integrally formed on the embedding housing (1) in two planes (9, 10) at right angles to one another, of which one is in the position parallel to the plane of the embedded carrier, and in that additional bearing surfaces are constructed by the conductors (2, 3, 4, 5), which are bent in a suitable manner, in each case in each of the planes (9, 10) of the embedding housing (1) at right angles to one another.

2. An acceleration detector according to Claim 1, characterized in that a support which is integrally formed on the carrier and has an exclusively mechanical action is associated with the conductors (2, 3, 4, 5).

## Revendications

1. Capteur d'accélération enrobé en une résine synthétique avec un détecteur micromécanique, un circuit d'exploitation réalisé sous forme de composant semiconducteur et associé audit détecteur et un support sur lequel sont préstructurés des conducteurs en forme de barrette électriquement reliés audit circuit d'exploitation, de telle sorte que lesdits conducteurs, après l'enrobage, émergent du boîtier d'enrobage et peuvent être séparés électriquement les uns des autres par un découpage libératoire,
caractérisé par le fait
que sur le boîtier d'enrobage (1) sont formées des surfaces d'appui (11, 12, 13) dans deux plans (9, 10) perpendiculaires l'un par rapport à l'autre dont l'un se trouve en position parallèle au plan du support enrobé et que dans respectivement chacun desdits plans (9, 10) perpendiculaires l'un par rapport à l'autre dudit boîtier d'enrobage (1) sont réalisées des surfaces d'appui supplémentaires par les conducteurs (2, 3, 4, 5) coudés d'une manière appropriée.

2. Capteur d'accélération selon la revendication 1,
caractérisé par le fait
qu'auxdits conducteurs (2, 3, 4, 5) est associé un appui formé sur le support et dont l'effet est exclusivement mécanique.
